# EUROPEAN PATENT SPECIFICATION

(11) **EP 1 752 347 B1**
(45) Date of publication and mention of the grant of the patent: **18.11.2009**
(21) Application number: 06016804.4
(22) Date of filing: 11.08.2006
(51) Int. Cl.: B60T 7/10

(54) **Ratchet type parking brake having quiet operation**
Leiser Feststellbremsratschenmechanismus
Frein de stationnement avec mécanisme d'encliquetage silencieuse

(30) Priority: 12.08.2005 US 708038 P; 08.08.2006 US 463168
(43) Date of publication of application: 14.02.2007
(73) Proprietor: Dura Global Technologies, Inc., Rochester Hills, Michigan 48309 (US)
(72) Inventor: Krupin, Vladmir G., Rochester Hills MI 48309 (US)
(74) Representative: O'Neill, Brian

(56) References cited:
- WO-A-2004/087476
- DE-U1- 29 800 573
- JP-A- 2002 302 024
- US-A- 4 519 270
- US-A- 4 872 368
- US-B1- 6 286 389

## Description

### FIELD OF THE INVENTION

The present invention generally relates to parking brake mechanisms and, more particularly, to parking brake mechanisms having a pawl-and-ratchet lock.

### BACKGROUND OF THE INVENTION

Parking or emergency brake mechanisms for actuating cable operated brake mechanisms are well known and commercially used in motor vehicles. See, for example, U.S. Patent Numbers 5,448,928, 5,546,828, and 5,588,335. Vehicle parking brake mechanisms are typically actuated by a foot-operated or hand-operated actuator lever positioned near the driver. The actuator lever is typically fixed to the vehicle by a mounting bracket or the like and attached to a brake cable connected to a vehicle parking brake system. The actuator lever is typically pivotably mounted on the mounting bracket and movable between a "brake released position" and one or more "brake applied positions." The brake cable is attached to the actuator lever so that rotation of the lever toward the "brake-applied positions" increases tension in the brake cable, thereby applying the parking brakes to the vehicle wheels to impede rotation thereof. A position lock is provided to releasably lock the actuator lever in a "brake-applied" position and a release mechanism is provided to selectively permit rotation of the lever back to the "brake released" position thereby decreasing tension in the brake cable and releasing the parking brakes from the wheels to permit rotation thereof.

Many parking brake mechanisms have a ratchet and pawl arrangement as part of the position or other lock. One disadvantage of this ratchet and pawl arrangement can be noise which is undesirable in some applications. These pawls engage many stops and the like and are also moved across teeth of the ratchets. All of these engagements can create "clicking" sounds.

Parking brake mechanisms that attempt to eliminate and/or reduce this noise have been introduced, See, for example, U.S. Patent Numbers 5,138,899 and 6,843,150 However, these "quiet-apply" parking brake mechanisms tend to be relatively complex and thus expensive to make and assemble. Additionally, there is a never ending desire to reduce the complexity and cost of motor vehicle components. Accordingly, there is a need in the art for an improved parking brake mechanism having relatively quiet operation.

WO 2004/087476 discloses a parking brake lever comprising a plastic parking brake lever, a plastic support, at which the parking brake lever is pivotably supported and a locking unit comprising a pawl which is mounted at the parking brake lever and a metal ratchet insert which is over moulded within the support. JP 2002 302024 discloses a brake apparatus which has vibration-proof rubber provided at the shaft hole of the ratchet pawl. DE 298 00 573 discloses an operating device for a vehicle handbrake having a damping element on the handbrake lever locking pawl and a release button enabling the gripping tooth to act with gear segment.

### SUMMARY OF THE INVENTION

The present invention provides a parking brake mechanism for a motor vehicle which addresses one or more problems of the related art. According to the present invention, a parking brake mechanism for a motor vehicle comprises, in combination, a mounting bracket, an actuator arm pivotably secured to the mounting bracket and movable between a brake-released position and a brake-applied position, and a lock operable to releasably secure the actuator arm in the brake-applied position and including a pawl engagable with a ratchet. The pawl includes a metal insert at least partially encapsulated in plastic.

From the foregoing disclosure and the following more detailed description of various preferred embodiments it will be apparent to those skilled in the art that the present invention provides a significant advance in the technology and art of parking brake mechanisms for motor vehicles. Particularly significant in this regard is the potential the invention affords for providing a high quality, reliable, low cost, and relatively quiet mechanism. Additional features and advantages of various preferred embodiments will be better understood in view of the detailed description provided below.

### BRIEF DESCRIPTION OF THE DRAWINGS

These and further features of the present invention will be apparent with reference to the following description and drawings, wherein:
FIG. 1 is a fragmented, elevational view of a parking brake mechanism according to a preferred embodiment of the present invention, wherein components are removed for clarity and the mechanism is in a rest or "brake- released" position;
FIG. 2 is a fragmented, elevational view of the parking brake mechanism of FIG. 1, wherein the mechanism is moving from a the rest position toward a lock or "brake-applied" position;
FIG. 3 is a fragmented, elevational view of the parking brake mechanism of FIGS. 1 and 2, wherein the mechanism is in a lock or "brake-applied" position;
FIG. 4 is a fragmented, elevational view of the parking brake mechanism of FIGS. 1 to 3, wherein the mechanism is in a release or "lock release" position;
FIG. 5 is a fragmented, elevational view of the parking brake mechanism of FIGS. 1 to 4, wherein the mechanism is in a first reload position while moving from the release position back toward the rest position;
FIG. 6 is a fragmented, elevational view of the parking brake mechanism of FIGS. 1 to 5, wherein the mechanism is in a second reload position while moving from the release position back toward the rest position;
FIG. 7 is a perspective view of a pawl of the parking brake mechanism of FIGS. 1 to 6; and
FIG. 8 is a perspective view of an insert of the pawl of FIG. 7.

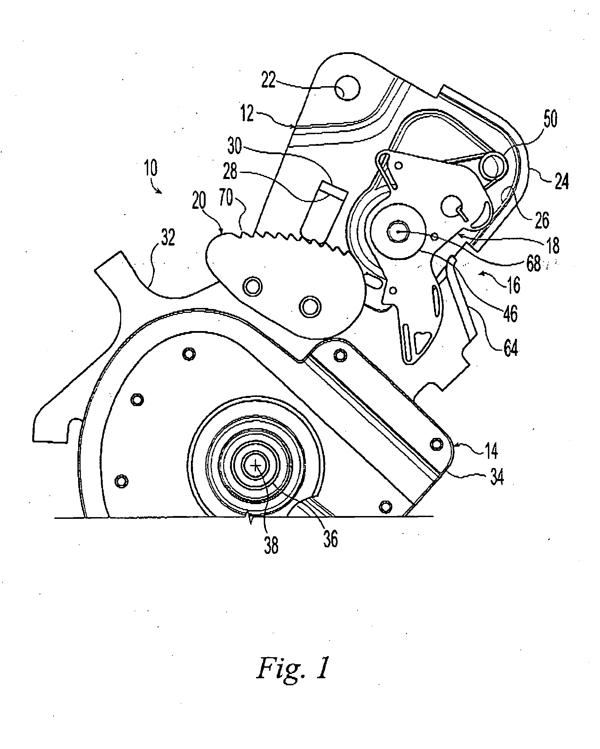

It should be understood that the appended drawings are not necessarily to scale, presenting a somewhat simplified representation of various preferred features illustrative of the basic principles of the invention. The specific design features of a parking brake mechanism for a motor vehicle as disclosed herein, including, for example, specific dimensions, orientations, locations, and shapes will be determined in part by the particular intended application and use environment. Certain features of the illustrated embodiments have been enlarged or distorted relative to others to facilitate visualization and clear understanding. In particular, thin features may be thickened, for example, for clarity or illustration. All references to direction and position, unless otherwise indicated, refer to the orientation of the parking brake mechanism illustrated in the drawings. In general, up or upward refers to an upward direction within the plane of the paper in FIG. 1 and down or downward refers to a downward direction within the plane of the paper in FIG. 1. Also in general, fore or forward refers to a direction toward the front of the motor vehicle, that is, toward the left within the plane of the paper in FIG. 1 and aft or rearward refers to a direction toward the rear of the motor vehicle, that is, to the right within the plane of the paper in FIG. 1.

### DETAILED DESCRIPTION OF CERTAIN PREFERRED EMBODIMENTS

It will be apparent to those skilled in the art, that is, to those who have knowledge or experience in this area of technology, that many uses and design variations are possible for the improved parking brake mechanisms disclosed herein. The following detailed discussion of various alternative and preferred embodiments will illustrate the general principles of the invention with reference to foot-operated, push-to-release parking brake mechanism. Other embodiments suitable for other applications, such as, for example hand-operated mechanisms and/or handle or power released mechanisms will be apparent to those skilled in the art given the benefit of this disclosure.

Referring now to the drawings, FIGS. 1 to 6 show a parking brake mechanism 10 according to a preferred embodiment of the present invention. The illustrated parking brake mechanism 10 includes a mounting bracket 12, an actuator arm 14 pivotably secured to the mounting bracket 12 and movable between a brake-released position and a brake-applied position, and a lock 16 operable to releasably secure the actuator arm 14 in the brake-applied position and including a pawl 18 engagable with a ratchet 20.

The illustrated mounting bracket 12 is sized and shaped to be secured to the motor vehicle to fix the parking brake mechanism 10 in a desired position. The illustrated mounting bracket 12 is provided with openings 22 for mounting fasteners but any other suitable securing means can alternatively be utilized. The illustrated mounting bracket 12 includes a flange 24 that forms a first or rest stop or abutment 26 and a tab 28 which forms a second or return stop or abutment 30. The first and second stops 26, 30 form limits of travel for the pawl 18 as described in more detail hereinafter. It is noted that in FIGS. 1 to 6, only a portion of the mounting bracket 12 is shown. It is also noted that the mounting bracket 12 can alternatively have any other suitable size and shape.

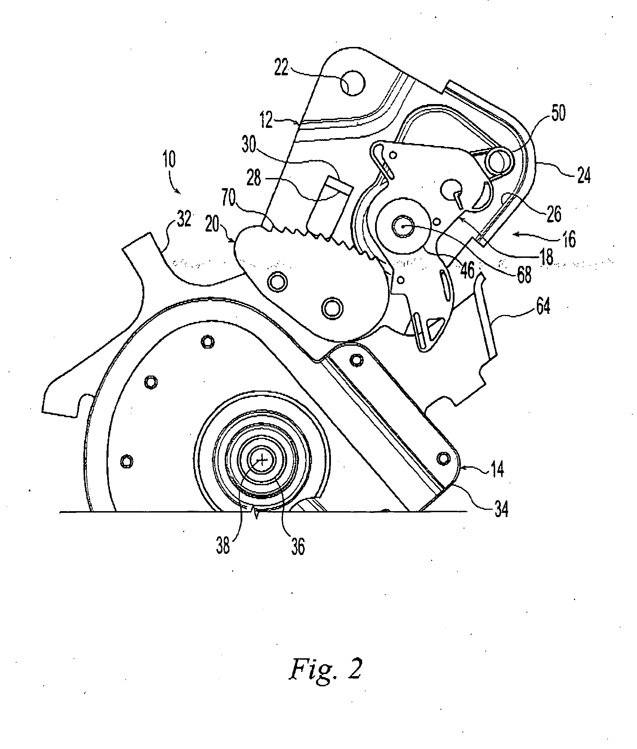

The illustrated actuator arm 14 includes a bracket member 32 and an arm member 34 secured together for pivotal motion together relative to the mounting bracket 12 about a pivot pin 36 forming a laterally extending pivot axis 38. The arm member 34 is elongate having a rearward facing pedal at a lower end thereof for depression by the driver. The arm member 34 downwardly extends from the pivot axis 38 so that the driver can pressure the pedal to forwardly move the pedal and pivot the actuator arm 14 about the pivot axis 38 to generally move the top of the actuator arm 14 in the rearward direction about the pivot axis 38 (in the clockwise direction in FIGS. 1 to 6) from a brake-released position (shown in FIG. 1) to a brake-applied position (shown in figure 2). A parking brake cable connects vehicle parking brakes to the actuator arm 14 in a known manner so that the pivoting movement of the actuator arm 14 tensions and untensions the parking brake cable. Preferably, the parking brake cable is untensioned when the actuator arm 14 is in the brake-release position and tensions the parking brake cable when in the brake-applied position. It is noted that the actuator arm 14 can alternatively have any other suitable size and shape.

The illustrated lock 16 includes the pawl 18 and the ratchet 20 which are sized, shaped and positioned to releasably secure the actuator arm 14 in the brake-applied position as described in more detail hereinafter. It is also noted that the lock 16 can alternatively have any other suitable form. The illustrated pawl and ratchet 18, 20 are also sized, shaped and positioned so that the lock 16 releases the actuator arm 14 when the driver pushes the pedal when the actuator arm 14 is locked in the brake-applied position by the lock 16. It is noted that the illustrated push to release feature can alternatively be replaced with any other suitable release such as a manually operated handle or a powered release.

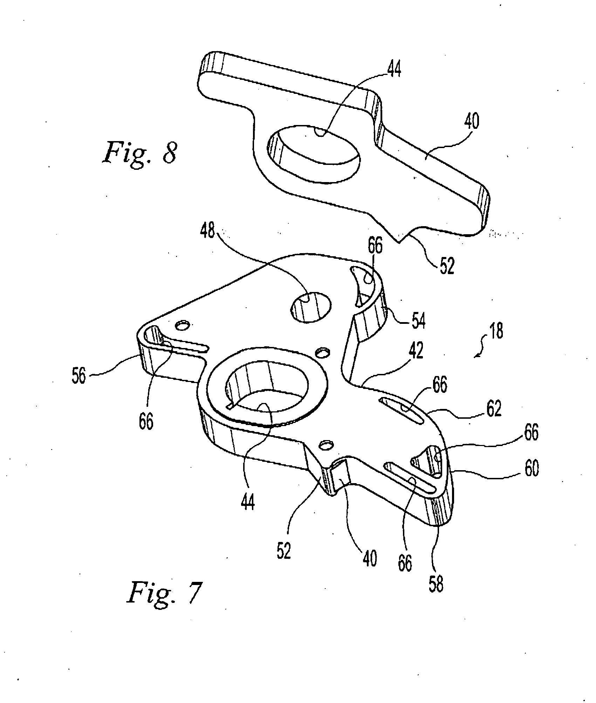

As best shown in FIGS. 7 and 8, the illustrated pawl 18 includes an insert or inner portion 40 and a covering or outer portion 42 formed over the insert 40. The insert 40 is preferably formed a metal such as steel or the like. The outer portion 42 is preferably formed of a plastic. It is believed that Nytel 5526 is a suitable plastic but any other suitable plastic can alternatively be utilized. The plastic is preferably soft enough so that it deforms and/or dampens vibrations upon contact. However, the plastic is also preferably hard enough that it wears at an undesirable rate. The illustrated outer portion 42 is overmolded onto the insert 40 but can alternatively be formed and secured to the insert 40 in any other suitable manner such as, for example adhesive. The illustrated outer portion 42 covers the entire insert 40 except for tooling locations for holding and locating the insert 40 in the mold but it is noted that the outer portion 42 can alternatively cover less of the insert 40.

The illustrated pawl 18 includes an opening 44 for receiving a pivot pin 46 and an opening 48 for cooperating with a spring member 50 as described in more detail hereinafter. The illustrated pawl 18 also includes a lock tooth 52 at a lower side thereof that is sized and shaped to cooperate with the ratchet 20 as described in more detail hereinafter. The illustrated pawl 18 includes a first resilient contact or engagement surface 54 that is sized and shaped to cooperate with the rest stop 26 of the mounting bracket 12 to limit rearward movement of the pawl 18 as described in more detail hereinafter. The illustrated pawl 18 includes a second resilient contact or engagement surface 56 that is sized and shaped to cooperate with the return stop 30 of the mounting bracket 12 to limit forward movement of the pawl 18 as described in more detail hereinafter. The illustrated pawl 18 includes third, fourth and fifth resilient contact or engagement surfaces 58, 60, 62 that are sized and shaped to cooperate with a reload cam or surface cam 64 of the actuator arm 14 to return the pawl 18 to its rest position as described in more detail hereinafter. The resilient engagement surfaces 54, 56, 58, 60, 62 are adapted to resiliently deform and or dampen vibrations upon impact of the pawl 18 with the other components and eliminate or substantially reduce noise that typically results from such impacts. It is noted that the illustrated plastic outer portion 42 of the pawl 18 eliminates metal to metal contact between the pawl 18 and the other components to further reduce the noise. The pawl 18 can have a greater or lesser number of the resilient engagement surfaces 54, 56, 58, 60, 62 depending on the number of contacts and noise requirements of the particular design. The illustrated resilient engagement surfaces 54, 56, 58, 60, 62 are spring members in the form of integral leaf springs. The integral leaf springs are formed by providing openings 66 in the outer portion of the pawl 18 located near the edge of the pawl 18 at the engagement surfaces 54, 56, 58, 60, 62. The term "integral" is used in this specification and the claims to mean a unitary or one piece component, that is, the illustrated leaf springs are part of a unitary one piece outer portion 42 of the pawl 18. The illustrated leaf springs are generally arc-shaped or curved to provide increased resiliency but any other suitable shape can alternatively be utilized. It is noted that the resilient engagement surfaces 54, 56, 58, 60, 62 can alternatively be formed in any other suitable manner. It is also noted that the pawl 18 can alternatively have any other suitable size and shape and can have any other number of the engagement surfaces 54, 56, 58, 60,62.

As best shown in FIGS. 1 to 6, the illustrated pawl 18 is pivotably secured to the mounting bracket 12 above the actuator arm 14 by the pivot pin 46 that forms a laterally extending pivot axis 68. The pawl 18 is located between the rest stop 26 and the return stop 30 to limit pivoting motion therebetween. The pawl 18 is resiliently biased by the spring member 50 toward its rest position wherein the first resilient engagement surface 54 is engaging the rest stop 26 of the mounting bracket 12. The illustrated spring member 50 is a torsion spring but it is noted that the spring member 50 can alternatively be any other suitable type of spring member.

As best shown in FIGS. 1 to 6, the illustrated ratchet 20 is secured to the actuator arm 14 for movement therewith as the actuator arm 14 pivots about its pivot axis 38 and includes a row of teeth 70. The teeth 70 are sized and shaped to cooperate with the pawl lock tooth 52 to permit movement of the ratchet 20 in the rearward direction when the pawl lock tooth 52 is engaging the ratchet teeth 70 but to prevent forward movement of the ratchet 20 in the forward direction when the pawl lock tooth 52 is engaging the ratchet teeth 70. It is also noted that the ratchet 20 can alternatively have any other suitable size and shape.

As best shown in FIG. 1, when the parking brake mechanism 10 is in a rest or brake-released position, the pawl's first resilient engagement surface 54 engages the rest stop 26 and the pawl's lock tooth 52 is disengaged from the ratchet teeth 70. The spring member 50 resiliently biases the pawl 18 into its rest position in engagement with the rest stop 26. The actuator arm 14 is in its rest or full rearward position so that the parking brake cable is untensioned and the parking brakes are disengaged from the vehicle wheels to permit rotation of the wheels.

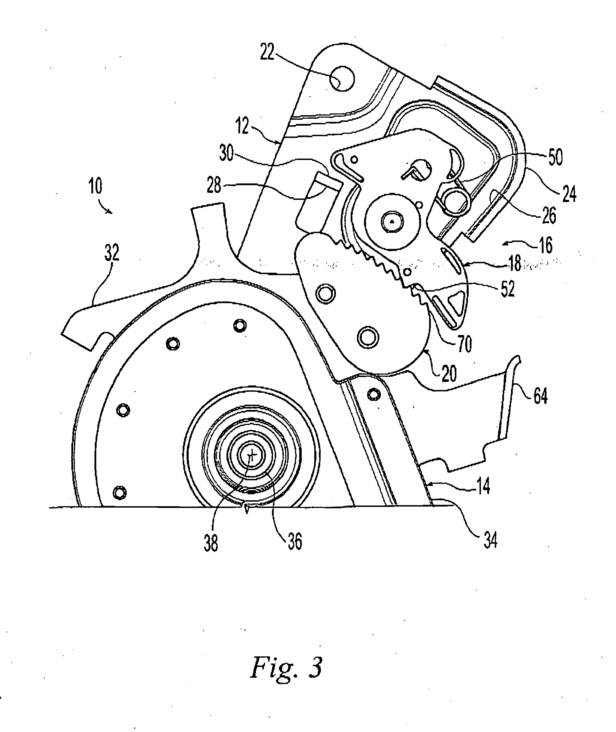

As best shown in FIG. 2, when the driver depresses the pedal to pivot the lower end of the actuator arm 14 forward, the upper end of the actuator arm 14 and the ratchet 20 are moved rearward toward the pawl 18. As the driver further depresses the pedal, the ratchet 20 engages the pawl's lock tooth 52. As best shown in FIG. 3, when the driver releases the pedal and the parking brake mechanism 10 is in its lock or brake applied position, the pawl's lock tooth 52 engages a tooth 70 of the ratchet 20 to secure the actuator am 14 in its lock position and prevent return of the actuator arm 14 toward its rest position (shown in FIG. 1). The actuator arm 14 is in its lock position so that the parking brake cable is tensioned and the parking brakes are engaged with the vehicle wheels to inhibit rotation of the wheels.

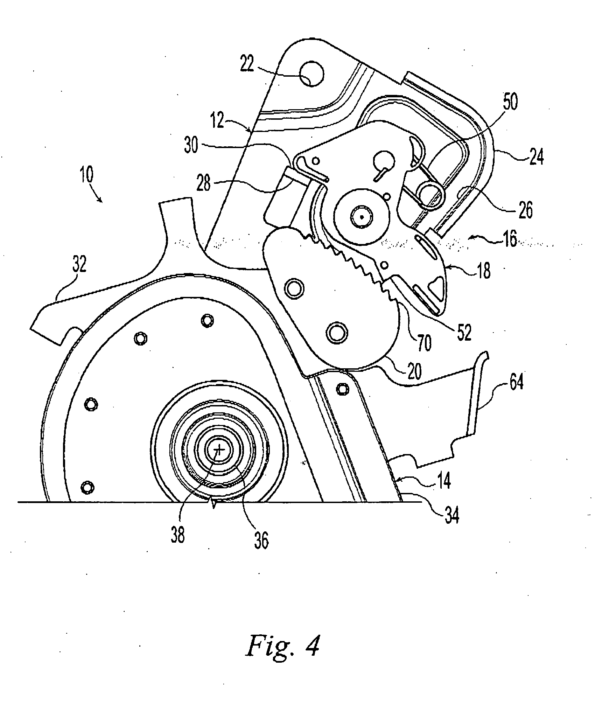

As best shown in FIG. 4, when the driver further depresses the pedal to release the parking brakes, the upper end of the actuator arm 14 moves rearward and pivots the pawl 18 until the pawl's second resilient engagement surface 56 engages the return stop 30 to stop forward pivoting movement of the pawl 18. The contact between the second engagement surface 56 and the return stop 30 is substantially noise free or silent as the spring member dampens vibrations. Once the pawl 18 stops, further movement of the actuator arm 14 disengages the ratchet teeth 70 from the pawl's lock tooth 52.

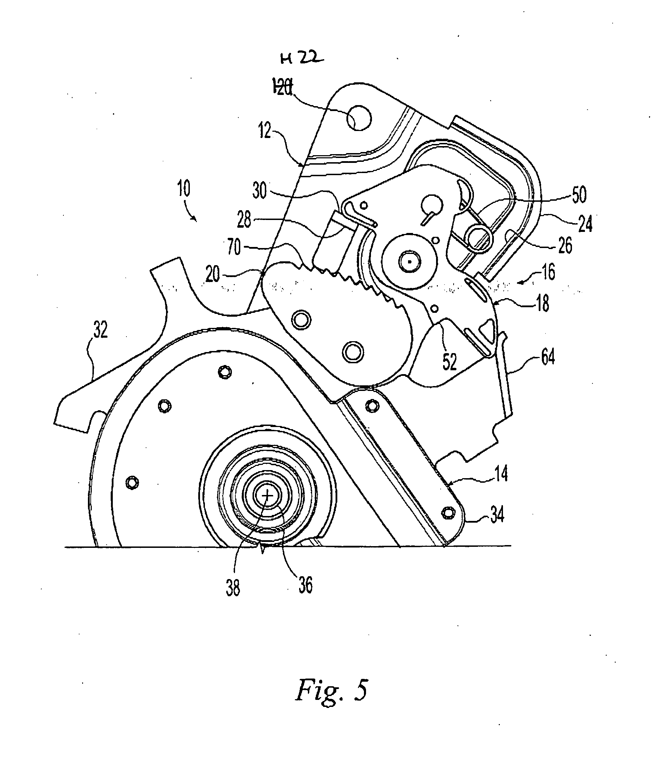

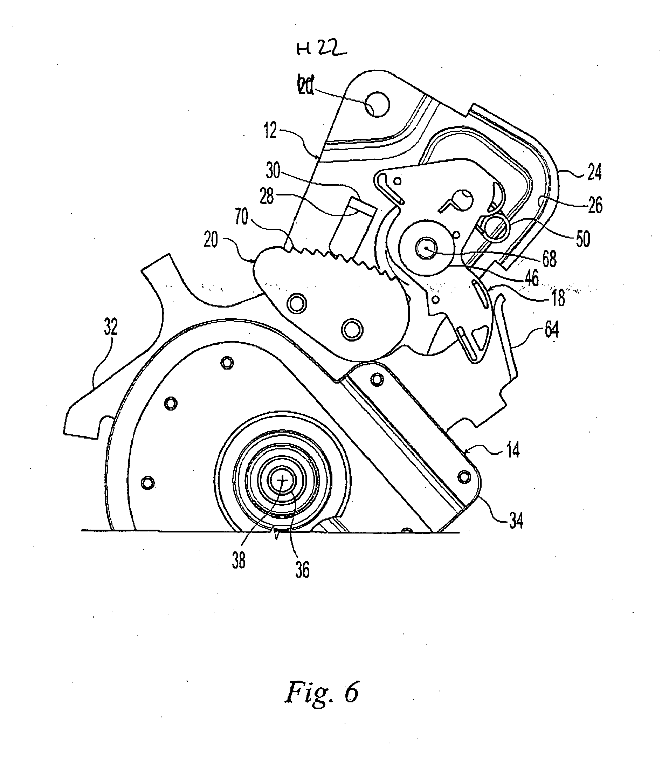

As best shown in FIGS. 5 and 6, once the driver releases the pedal, a return spring moves the actuator arm 14 back toward its rest position (shown in FIG. 1). As the upper end of the actuator arm 14 moves in the forward direction, its reload surface or cam 64 sequentially engages the third, fourth and fifth resilient engagement surfaces 58, 60, 62 to pivot the pawl back to its rest position (shown in FIG. 1). The impact and contact between the third, fourth and fifth resilient engagement surfaces 58, 60, 62 and the return cam 64 is substantially noise free or silent as the spring members dampen vibrations. As best shown in FIG 1, the pawl's first resilient engagement surface 54 engages the rest stop 26 when the pawl 18 reaches its rest position. The impact between the first engagement surface 54 and the rest stop 26 is substantially noise free or silent as the spring member dampens vibrations. Once the pawl 18 is in its rest position, the actuator arm 14 disengages the pawl 18 and continues to rotate toward its rest position. Once the actuator arm 14 is in its rest position, the parking brake mechanism 10 is in its rest position as described hereinabove with the parking brake cable untensioned and the parking brakes released from the vehicle wheels so that the vehicle wheels are free to rotate. Whenever desired, the driver can again apply the parking brakes with the parking brake mechanism 10 as described hereinabove.

It is apparent from the above detailed description, that the pawl 18 of the parking brake mechanism 10 according to the present invention reduces and/or eliminates noise typically caused by a plurality of contacts between the pawl 18 and the mounting bracket 12, actuator arm 14, and/or the ratchet 20 because metal-to-metal contact has been eliminated and the resilient engagement surfaces 54, 56, 58, 60, 62 dampen vibrations. It is also apparent that the parking brake mechanism 10 according to the present invention is relatively easy to manufacture and assemble.

## Claims

1. A parking brake mechanism for a motor vehicle comprising, in combination:
a mounting bracket (12);
an actuator arm (14) pivotably secured to the mounting bracket and movable between a brake-released position and a brake-applied position;
a lock (16) operable to releasably secure the actuator arm in the brake-applied position and including a pawl (18) engagable with a ratchet (20);
wherein the pawl includes a metal insert (40) at least partially encapsulated in plastic (42);
wherein the pawl is located between first and second stops (26, 30) to limit pivoting motion of the pawl between the first and second stops; and
**characterised in that** the plastic forms leaf springs (54, 56) at a peripheral edge of the pawl that engage the first and second stops to reduce noise upon contact between the pawl and the first and second stops.

2. The parking brake mechanism according to claim 1, wherein the plastic provides at least one resilient engagement surface (58, 60, 62) that engages reload surface (64) to reduce noise upon contact between the pawl and the reload surface.

3. The parking brake mechanism according to claim 1 or 2, wherein the plastic forms at least one leaf spring (58, 60, 62) that engages a reload surface (64) to reduce noise upon contact between the pawl and the reload surface.

4. The parking brake mechanism according to any preceding claim, wherein the plastic forms a plurality of leaf springs (58, 60, 62) that engage a reload surface (64) to reduce noise upon contact between the pawl and the reload surface.

5. The parking brake mechanism according to any preceding claim, wherein the plastic forms at least one a resilient spring member (58, 60, 62) that engages a reload surface (64) to reduce noise upon contact between the pawl and the reload surface.

6. The parking brake mechanism according to claim 5, wherein the plastic forms a plurality of the spring members (58, 60, 62).

7. The parking brake mechanism according to any preceding claim, wherein the pawl includes a lock tooth (52) that engages the ratchet and at least an engagement portion of the tooth is covered by the plastic.

8. The parking brake mechanism according to any preceding claim, wherein the actuator arm includes a reload surface (64) to move the pawl as the actuator arm moves toward the brake-released position and engagement surfaces (58, 60, 62) of the pawl which engage the reload surface are formed by the plastic.

9. The parking brake mechanism according to claim 8, wherein the engagement surfaces are in the form of leaf springs.

10. The parking brake mechanism according to any preceding claim, wherein the plastic dampens vibrations upon contact of the pawl with the ratchet, the mounting bracket, and the actuator arm.

11. The parking brake mechanism according to any preceding claim, wherein the leaf springs are formed by providing openings in the pawl near the edge of the pawl.

12. The parking brake mechanism according to any preceding claim, wherein the leaf springs are arc shaped to provide increased resiliency.

## Patentansprüche

1. Parkbremsmechanismus für ein Kraftfahrzeug, der Folgendes in Kombination umfasst:
eine Halterung (12);
einen Betätigungsarm (14), der drehbar an der Halterung befestigt ist und zwischen einer Stellung, in der die Bremse gelöst ist und einer Stellung, in der die Bremse aktiviert ist, bewegbar ist;
eine Sperrvorrichtung (16), die wirksam ist, den Betätigungsarm lösbar in der Stellung, in der die Bremse aktiviert ist, zu sichern und die eine Sperrklinke (18) umfasst, die mit einer Ratsche (20) in Eingriff treten kann;
wobei die Sperrklinke einen Metalleinsatz (40) umfasst, der mindestens teilweise in Kunststoff (42) gekapselt ist;
wobei die Sperrklinke zwischen einem ersten und einem zweiten Anschlag (26, 30) angeordnet ist, um die Drehbewegung der Sperrklinke zwischen dem ersten und dem zweiten Anschlag zu begrenzen; und
**dadurch gekennzeichnet, dass** der Kunststoff Blattfedern (54, 56) an einem Umfangsrand der Sperrklinke bildet, die an dem ersten und dem zweiten Anschlag angreifen, um Geräusch beim Kontakt zwischen der Sperrklinke und dem ersten und dem zweiten Anschlag zu reduzieren.

2. Parkbremsmechanismus nach Anspruch 1, wobei der Kunststoff mindestens eine elastische Angriffsfläche (58, 60, 62) bereitstellt, die an einer Umladefläche (64) angreift, um Geräusch beim Kontakt zwischen der Sperrklinke und der Umladefläche zu reduzieren.

3. Parkbremsmechanismus nach Anspruch 1 oder 2, wobei der Kunststoff mindestens eine Blattfeder (58, 60, 62) bildet, die an einer Umladefläche (64) angreift, um Geräusch beim Kontakt zwischen der Sperrklinke und der Umladefläche zu reduzieren.

4. Parkbremsmechanismus nach einem der vorangehenden Ansprüche, wobei der Kunststoff mehrere Blattfedern (58, 60, 62) bildet, die an einer Umladefläche (64) angreifen, um Geräusch beim Kontakt zwischen der Sperrklinke und der Umladefläche zu reduzieren.

5. Parkbremsmechanismus nach einem der vorangehenden Ansprüche, wobei der Kunststoff mindestens ein elastisches Federglied (58, 60, 62) bildet, das an einer Umladefläche (64) angreift, um Geräusch beim Kontakt zwischen der Sperrklinke und der Umladefläche zu reduzieren.

6. Parkbremsmechanismus nach Anspruch 5, wobei der Kunststoff mehrere der Federglieder (58, 60, 62) bildet.

7. Parkbremsmechanismus nach einem der vorangehenden Ansprüche, wobei die Sperrklinke einen Sperrzahn (52) umfasst, der mit der Ratsche in Eingriff tritt und mindestens ein Eingriffsabschnitt des Zahns von dem Kunststoff bedeckt ist.

8. Parkbremsmechanismus nach einem der vorangehenden Ansprüche, wobei der Betätigungsarm eine Umladefläche (64) umfasst, um die Sperrklinke zu bewegen, wenn sich der Betätigungsarm zur Stellung, in der die Bremse gelöst ist, bewegt und Angriffsflächen (58, 60, 62) der Sperrklinke, die an der Umladefläche angreifen, durch den Kunststoff gebildet sind.

9. Parkbremsmechanismus nach Anspruch 8, wobei die Angriffsflächen die Form von Blattfedern haben.

10. Parkbremsmechanismus nach einem der vorangehenden Ansprüche, wobei der Kunststoff Vibrationen beim Kontakt der Sperrklinke mit der Ratsche, der Halterung und dem Betätigungsarm dämpft.

11. Parkbremsmechanismus nach einem der vorangehenden Ansprüche, wobei die Blattfedern durch Vorsehen von Öffnungen in der Sperrklinke, nahe dem Rand der Sperrklinke, gebildet werden.

12. Parkbremsmechanismus nach einem der vorangehenden Ansprüche, wobei die Blattfedern bogenförmig sind, um für erhöhte Elastizität zu sorgen.

## Revendications

1. Mécanisme de frein de stationnement pour véhicule à moteur, comprenant, en combinaison :
un support de montage (12) ;
un bras actionneur (14) fixé de manière pivotante au support de montage et mobile entre une position de frein desserré et une position de frein serré ;
un verrou (16) utilisable pour fixer de manière libérable le bras actionneur en position de frein serré et comprenant un cliquet (18) pouvant s'engager sur un rochet (20) ;
où le cliquet comporte un insert métallique (40) au moins partiellement encapsulé dans du plastique (42) ;
où le cliquet est situé entre une première et une deuxième butées (26, 30) pour limiter le pivotement du cliquet entre la première et la deuxième butées ; et
**caractérisé en ce que** le plastique forme des ressorts à lames (54, 56) à un bord périphérique du cliquet qui s'engagent sur la première et la deuxième butées pour réduire le bruit lors du contact entre le cliquet et la première et la deuxième butées.

2. Mécanisme de frein de stationnement conforme à la revendication 1, dans lequel le plastique fournit au moins une surface d'engagement élastique (58, 60, 62) qui s'engage sur une surface de rechargement (64) pour réduire le bruit lors du contact entre le cliquet et la surface de rechargement.

3. Mécanisme de frein de stationnement conforme à la revendication 1 ou 2, dans lequel le plastique forme au moins un ressort à lames (58, 60, 62) qui s'engage sur une surface de rechargement (64) pour réduire le bruit lors du contact entre le cliquet et la surface de rechargement.

4. Mécanisme de frein de stationnement conforme à une quelconque des revendications précédentes, dans lequel le plastique forme une pluralité de ressorts à lames (58, 60, 62) qui s'engagent sur une surface de rechargement (64) pour réduire le bruit lors du contact entre le cliquet et la surface de rechargement.

5. Mécanisme de frein de stationnement conforme à une quelconque des revendications précédentes, dans lequel le plastique forme au moins un élément de ressort élastique (58, 60, 62) qui s'engage sur une surface de rechargement (64) pour réduire le bruit lors du contact entre le cliquet et la surface de rechargement.

6. Mécanisme de frein de stationnement conforme à la revendication 5, dans lequel le plastique forme une pluralité d'éléments de ressort (58, 60, 62).

7. Mécanisme de frein de stationnement conforme à une quelconque des revendications précédentes, dans lequel le cliquet contient une dent de verrouillage (52) qui s'engage sur le rochet et au moins une partie d'engagement de la dent est couverte par le plastique.

8. Mécanisme de frein de stationnement conforme à une quelconque des revendications précédentes, dans lequel le bras actionneur comprend une surface de rechargement (64) pour déplacer le cliquet quand le bras actionneur se déplace vers la position de frein desserré et des surfaces d'engagement (58, 60, 62) du cliquet qui s'engagent sur la surface de rechargement sont formées par le plastique.

9. Mécanisme de frein de stationnement conforme à la revendication 8, dans lequel les surfaces d'engagement sont en forme de ressorts à lames.

10. Mécanisme de frein de stationnement conforme à une quelconque des revendications précédentes, dans lequel le plastique amortit les vibrations lors du contact du cliquet avec le rochet, le support de montage et le bras actionneur.

11. Mécanisme de frein de stationnement conforme à une quelconque des revendications précédentes, dans lequel les ressorts à lames sont formés en ménageant des ouvertures dans le cliquet près du bord du cliquet.

12. Mécanisme de frein de stationnement conforme à une quelconque des revendications précédentes, dans lequel les ressorts à lames sont en forme d'arc afin d'assurer une plus grande élasticité.
